# EUROPEAN PATENT SPECIFICATION

(11) **EP 3 852 512 B1**
(45) Date of publication and mention of the grant of the patent: **01.11.2023**
(21) Application number: 19829325.0
(22) Date of filing: 18.09.2019
(51) Int. Cl.: A01G 9/24

(54) **A GREENHOUSE HAVING A CLIMATE CONTROL SYSTEM AND CLIMATE CONTROL SYSTEM FOR CONTROLLING THE GREENHOUSE CLIMATE IN THE GROWING AREA**
GEWÄCHSHAUS MIT KLIMAREGELUNGSSYSTEM UND KLIMAREGELUNGSSYSTEM ZUR STEUERUNG DES GEWÄCHSHAUSKLIMAS IM ANBAUGEBIET
SERRE COMPORTANT UN SYSTÈME DE RÉGULATION DE CLIMATISATION ET SYSTÈME DE RÉGULATION DE CLIMATISATION POUR CONTRÔLER LE CLIMAT DE LA SERRE DANS LA ZONE DE CULTURE

(30) Priority: 20.09.2018 NL 2021676; 23.04.2019 NL 2022992
(43) Date of publication of application: 28.07.2021
(73) Proprietor: VDB B.V., 3708 DC Zeist (NL)
(72) Inventor: VAN DEN BERG, Bart Jan, 3514 GH Utrecht (NL)
(74) Representative: EP&C
(86) International application number: PCT/NL2019/050613
(87) International publication number: WO 2020/060402

(56) References cited:
- EP-A1- 2 774 478
- WO-A2-2009/060436
- US-A- 5 050 390

## Description

In general the present invention relates to a greenhouse for growing plants like flowers, crops, fruit and/or vegetables and the like having a climate control system and a climate control system for controlling the greenhouse interior climate in the growing area.

In a greenhouse conditions of the interior climate are controlled for allowing an optimal growth of plants. These growth conditions are often directed to maximizing the yield and profits in terms of quality and quantity per surface area with respect to investments in equipment and operating costs. Dependent on the specific requirements of the type of plants that are grown and the actual outdoor conditions including temperature, humidity and incidence of light (solar radiation and/or lamps), these growth conditions mainly concern air humidity, air temperature and carbon dioxide level of the interior air of the greenhouse.

During their growth the plants evaporate water. In view thereof the air humidity of the interior greenhouse air increases continuously, unless counter measures are taken to dehumidify the greenhouse air and maintain a desired humidity level. Traditionally, part of the humid interior air was vented into the environment by opening (roof) windows of the greenhouse and replaced by fresh, relatively dry air from the outside. Nowadays, active venting systems are used, which include fans for sucking outside air and blowing it into the greenhouse.

An example of such a system is known from US2008/000151A1, wherein ambient air optionally cooled in a pad wall cooling device is introduced via a separated part (also known in the field as "corridor") into the greenhouse via tubes or other distribution means to cool and dehumidify the greenhouse interior air. The greenhouse interior air is recycled via the corridor and mixed with the introduced ambient air to establish a desired temperature and humidity before being returned to the greenhouse interior. The tubes or the corridor may be provided with a heat exchanger for cooling or heating the air flowing therein. Excess air can be vented from the greenhouse by conventional greenhouse vents. In practical embodiments thereof, in particular in hot climates (both high and low humidity), a greenhouse having a corridor and a pad wall cooling device for adiabatic cooling of outside air by evaporation of water is known, wherein high volumes of air (combination of greenhouse air and ambient air) are circulated (e.g. 60-120 m3/m2hr) in order to dehumidify the greenhouse air at a relatively small humidity deficit (difference between the actual humidity of the greenhouse air drawn in with respect to the maximum humidity thereof).

Generally replacing humid greenhouse interior air by dry air from the outside has a number of disadvantages. One major concern, in particular at the high volumes in practice, is that the carbon dioxide level of the indoor air is reduced by this replacement, as the optimal growth conditions in a greenhouse include a CO2 level that is typically 2 to 3 times the CO2 content of outside air. A lower CO2 level results in a reduced growth rate. In order to maintain the CO2 level at a desired value or range carbon dioxide may be added, e.g. derived from flue gas or by direct CO2 injection. If the CO2 is derived from locally generated flue gas, heat is produced somewhere, which cannot be used always in a beneficial manner at the same time. Therefore the overall energy efficiency may be affected. Optimal growth conditions also include high sunlight incidence and appropriate temperatures. Under optimal growth conditions the water production due to photosynthesis is the largest and thus the need for humidity removal is the highest. Venting large volumes proposed in US2008/000151A1 is not economical in view of CO2 level maintenance.

In addition in the practical corridor embodiments of US2008/000151A1 the pad wall cooling increases the humidity of the ambient air from the environment. In order to dehumidify the greenhouse interior air large volumes of ambient air are required.

Another drawback is that by venting the greenhouse air any heat contained in the greenhouse air is lost.

Another drawback of refreshing the greenhouse interior air climate by ambient air from the outside is that typically the ambient air has a lower temperature than the greenhouse interior air and needs to be pre-heated to about the prevailing greenhouse interior air temperature in the greenhouse in order to maintain a desired growth temperature. This pre-heating also has a negative impact on the energy-efficiency of the greenhouse.

US5050390A has disclosed an apparatus for conditioning air in an enclosure, such as a greenhouse, which is based on direct contact air--brine vapor heat exchangers. This know system includes a brine reservoir, a direct contact air-brine-vapor heat exchanger, a brine evaporator and a brine circulation system for exchanging brine between the reservoir and heat exchanger, and between the reservoir and the evaporation. The apparatus also includes a condenser associated with the evaporator, a primary air circulation system for exchanging air between the heat exchanger and the enclosure in order to dry the air, and a secondary air circulation system for exchanging air between the evaporator and the condenser for evaporating water from the brine.

In order to alleviate these disadvantages so called closed greenhouse concepts have been developed, wherein the greenhouse interior air is kept essentially within the greenhouse without any (or only very limited due to inevitable leakage such as via sluices) exchange with and replacement by ambient air, making it more economical to maintain the greenhouse interior air at the required temperature and carbon dioxide level. These concepts often include dehumidification of the greenhouse interior air by condensing on a cooled heat-exchanging surface.

However, as said before, the water production by the growing plants is the highest under optimal conditions, requiring the highest condensing capacity. Thus in order to be capable of operating the greenhouse under these conditions the heat exchanging capacity for condensation should be designed accordingly which involves high investment expenses. This need for the highest condensing capacity is likely to occur only during a limited period of time over a year and over a day, depending on the geographical location of the greenhouse and the associated climate conditions. It has been estimated by the present applicant that in total this need exists only over 8-15% of a whole year.

Another reason why investment expenses are high for closed greenhouse operation, is the fact that greenhouse air can only be cooled and dehumidified to a certain minimum temperature. Below this threshold condensation occurs when cooled air is mixed with greenhouse air of a higher temperature and humidity. Condensate drops dripping on crops have a negative effect on crop quality.

It is an object of the invention to provide a greenhouse that can be operated in an essentially closed state allowing to maintain the growing conditions over an essential part of the year given a certain installed condensation capacity, and when the installed condensation capacity is insufficient allowing to operate it in a semi-closed state under efficient energy consumption. Another object of the invention is to provide a climate control system that could be operated at low temperatures downstream the condenser (hence, deep dehumification), which allows in a reduction of the number of climate control units compared to the prior art systems, while maintaining the possibility of achieving the desired temperature and humidity of the recycling greenhouse air.

Yet another object is to avoid the risk of condensate being present in the air flow after conditioning, that is returned to the growing area.

Accordingly the invention provides a greenhouse for growing plants, comprising
a growing area for growing crops,
a climate control system for controlling the greenhouse interior climate in the growing area, wherein the climate control system comprises
a condenser for dehumidifying greenhouse air having - at the air side - an air inlet for supplying greenhouse air and an air outlet for discharging dehumidified air, and - at the liquid side - a liquid inlet for supplying an aqueous liquid flow and a liquid outlet for discharging an in the condenser heat exchanged aqueous liquid flow; and
a greenhouse air heat exchanger for heat-exchange between greenhouse air derived from the growing area upstream of the air inlet of the condenser and in the condenser dehumidified greenhouse air downstream of the air outlet of the condenser, comprising an air inlet of greenhouse air from the greenhouse interior climate, wherein the air inlet is connected to the air inlet of the condenser through the greenhouse air heat exchanger, and an air discharge of heat exchanged, dehumidified greenhouse air, wherein the air outlet of the condenser is connected to the air discharge through the greenhouse air heat exchanger a first controllable bypass for allowing greenhouse air to bypass the greenhouse air heat exchanger;
a controllable fan configured to generate a flow of greenhouse air through the greenhouse air heat exchanger and the condenser,
a mixing chamber in fluid communication with the air discharge of the greenhouse air heat exchanger and in fluid communication with the growing area for introducing greenhouse air and having a controllable inlet for introducing ambient air from the greenhouse exterior environment, and an outlet for air in fluid communication with the growing area; and a controlled fan in the outlet for generating a flow of air from the mixing chamber to the greenhouse growing area.

The greenhouse according to the invention comprises a growing area, where plants are grown, and a climate control system configured to adjust the greenhouse interior air to predetermined conditions by means of a condenser, a greenhouse air heat exchanger, which can be bypassed at least partially, a mixing chamber, if necessary having a feed of ambient air from outside the greenhouse, , and suitable pump means for establishing the various flows, such as fans. The various components are connected by means of conduits, provided with sensors and suitable control valves and the like. A control system is present to control the system components and valves and operably connected thereto.

Typically greenhouse interior air is drawn from the growing section, at least a part of which is passed into the greenhouse air heat exchanger, which preferably has a counterflow configuration. In the greenhouse air heat exchanger the incoming greenhouse air transfers heat to the outgoing dehumidified greenhouse air, which has been subjected to condensation in the condenser. The air flow through the greenhouse air heat exchanger and condenser is determined by the controllable fan, e.g. in the air inlet or air discharge of the greenhouse air heat exchanger, and the controllable bypass over the greenhouse air heat exchanger. The controllable bypass can be arranged at the feed of the heat exchanger, at the discharge thereof, or at both the feed and discharge.

The dehumidified and heat exchanged air leaving the greenhouse air heat exchanger is fed to the mixing chamber, typically by means of an air distributor arranged in the interior of the mixing chamber. Greenhouse air from the growing area bypassing the assembly of heat exchanger and condenser and heat exchanged greenhouse air subjected to condensation are mixed in the mixing chamber. The mixing chamber is provided with an outlet configured for returning air from the mixing chamber to the growing area. This returning air flow is determined by the controlled fan in the outlet. The condenser is typically configured to deeply cool the greenhouse air and thus dehumidify the greenhouse air. The humidity of the greenhouse air that is returned to the growing area, may be too low for the crops being grown. In such a situation advantageously the dehumidified and heat exchanged greenhouse air is mixed with greenhouse air that bypasses the assembly of heat exchanger and condenser instead of adjusting the operation of the condenser. This allows to maintain the condenser in its energy efficient operation mode, while the humidity of the air that is returned to the growing area is determined by adjusting the controlled fan in the outlet and/or the controllable fan drawing greenhouse air into the assembly of the greenhouse air heat exchanger and condenser that determine the respective flows. The mixing chamber is also provided with a controlled inlet for entering ambient air from the outside environment to the mixing chamber.

Prior to entering the condenser, which preferably has a counterflow configuration, the greenhouse air to be dehumidified is pre-cooled in the greenhouse air heat exchanger against the flow of dehumidified greenhouse air that is returned from the condenser, which dehumidified greenhouse air is pre-heated thereby. The greenhouse air heat exchanger, preferably also having a counter flow configuration, is capable of withdrawing about 35-50% of the coldness required for dehumidification by pre-heating the dehumidified greenhouse air that is to be returned to the greenhouse interior via the mixing chamber. This allows for a similar reduction of the condenser and cooling capacity thereof.

Thus in the greenhouse air heat exchanger the temperature of the greenhouse air after condensation is brought back close to the temperature in the greenhouse growing section and flows via the mixing chamber without introduction of fresh ambient air back to the growing area. This allows to adjust the CO2 level, temperature and humidity at their optimal values for that time, without any losses of CO2 to the environment, while the energy consumption is kept low. The heat that becomes available from the condenser can be reused for heating purposes e.g. using a heat pump. The condensate (water) can also be reused in the growing section. Typically the installed condensation capacity is sufficient to operate the greenhouse maintaining a desired level of temperature, humidity and carbon dioxide in a closed state during a main period of a year, that is to say without venting greenhouse air to the environment on purpose and introducing fresh air from the environment. However, at times when the installed condensation capacity is insufficient, the greenhouse is operated in a semi-closed condition, wherein some greenhouse air has to be vented and replaced by fresh air from the outside. Typically in such a situation the temperature of the ambient air is higher than the desired temperature for introducing into the growing area. Then ambient air is introduced in the mixing chamber in a controlled manner and mixed with the heat-exchanged, dehumidified greenhouse air, and then fed as a mixed flow to the growing area. If the ambient air is too hot, then a part of the greenhouse air derived from the growing area is allowed to bypass the greenhouse air heat exchanger and is directly fed to the condenser and/or greenhouse air after condensation is allowed to bypass the greenhouse air heat exchanger and is directly fed to the air discharge of the heat exchanger. In this way the dehumidified air is not fully reheated in the greenhouse air heat exchanger, and is used to cool the hot ambient air that is introduced in the mixing chamber, while the humidity of the recycled greenhouse air is lowered. Partially reheating of the cooled greenhouse air at the exit of the condenser is still required in order to prevent condensation after mixing with ambient air of a higher temperature and humidity.

In a preferred embodiment the bypass is arranged at the discharge side of the heat exchanger, in other words downstream of the condenser. In practice it may be beneficial to allow to pass a partial flow of the dehumidified air downstream of the condenser directly to the mixing chamber. Even then condensation in the mixing chamber is prevented. In particular when the greenhouse cannot be operated in a fully closed condition and therefore some greenhouse air is vented and ambient air for replacement of the vented amount is introduced, while maintaining the appropriate (near optimal) conditions, condensation is also prevented if this partial flow of dehumidified air is passed into the feed of ambient air. The ambient air is dry and will not form condensate, when it is mixed with the cold dehumidified air that is derived directly from the condenser.

The various flows, in particular the appropriate mixing ratios of the greenhouse air bypassing the assembly, the dehumidified greenhouse air and the optional fresh outside air, are controlled by the fan in the outlet of the mixing chamber to the growing area, the controllable fan associated with the assembly of the greenhouse air heat exchanger and the condenser and the various ambient air and greenhouse air valves. By suitably adjusting these flows near optimal conditions can be set also under conditions, where the installed condensation capacity in itself is insufficient for fully closed operation. In an advantageous embodiment the controllable fan is arranged in the outlet of the greenhouse air heat exchanger. In view of compactness and accessibility of the assembly of greenhouse air heat exchanger and condenser a preferred position of the controllable fan is in the air inlet of the greenhouse air heat exchanger. Both positions allow the fan to be operated with air that is not too moistened and cold.

The number of climate control units, in particular the number of condensers and associated greenhouse air heat exchangers and appropriate heat pump, is selected such that up to a certain amount of light incidence the greenhouse can be operated in an essentially closed state. The air mixed in the mixing chamber is passed back from the mixing chamber to the growing area by means of a fan and commonly applied tubes that are located above, at or under the culturing beds or gutters in the growing sections.

In an embodiment the air discharge of the greenhouse air heat exchanger is connected to an air distributor, positioned in the mixing chamber, for distributing the heat exchanged, dehumidified greenhouse air in the mixing chamber. Preferably the air inlet of the heat exchanger is positioned at a position higher than the controllable inlet for introducing ambient air, more preferably the air inlet is positioned above the air distributor. Advantageously the outlet of the mixing chamber is positioned below the air inlet of the greenhouse air heat exchanger. Each of these features contributes to a proper mixing of recycling greenhouse air, heat-exchanged condensed greenhouse air and ambient air, if any, as well as preventing completely shortcutting the mixing area in the mixing chamber.

In a further embodiment a further bypass conduit is provided between the air inlet and air discharge of the greenhouse air heat exchanger. This further bypass conduit can equalize the flow of greenhouse air through the assembly of greenhouse air heat exchanger and condenser, in particular when there is a partial flow of greenhouse air through the first controlled bypass over the greenhouse air heat exchanger. The greenhouse air by-pass conduit between air inlet and air discharge will also raise the humidity at the exit of the mixing chamber when the climate control units operate at low temperatures downstream the condenser, thereby controlling the desired conditions for temperature and humidity at the exit of the mixing chamber.

In an embodiment the condenser and greenhouse air heat exchanger are positioned inside the mixing chamber, the mixing chamber preferably being a working and maintenance space (so called "corridor") of the greenhouse, separated from the growing area. A greenhouse having such a corridor that also functions as a mixing chamber is already in use in hot climates to mix greenhouse air with fresh outside air. In these prior art corridors the hot outside air may be cooled in evaporative walls (so called pad walls) prior to introduction in the corridor. In the invention the properties of the air to be returned from the working and maintenance space to the greenhouse (thus the air mixture of dehumidified air in the condenser of the climate control system for conditioning greenhouse air according to the invention and optionally ambient air) is controlled by the condenser and greenhouse air heat exchanger, thus without the need of pad walls which raise the humidity of the entering ambient air. As explained, in the invention the greenhouse air that has been dehumidified in the condenser is not heated entirely to the prevailing temperature in the growing area by the greenhouse air heat exchanger, but to a somewhat lower temperature. The dehumidified air is then in case of insufficient capacity mixed with the ambient air in the appropriate ratio to achieve an air mixture having the desired temperature and humidity that is returned to the greenhouse growing area.

In another embodiment the condenser and greenhouse air heat exchanger are positioned outside the mixing chamber. In this embodiment the space for accommodating the local heat condenser and greenhouse air heat exchanger can be suitably designed between the roof supporting columns, typically made from steel, adjacent to the (glass) panel head wall, of the greenhouse. Typically a greenhouse has roof supporting columns evenly distributed along the (glass) panel head wall, e.g. spaced about 8 m apart. The growing area between adjacent columns is called "trellies". In each "trellie" generally 4-6 cultivation gutters are present. The cultivation gutters are typically arranged perpendicular to the (glass) head panel leaving free a gap (about several tens of centimetres such as 30 cm). This gap could be favourably partially used to position the condenser, greenhouse air heat exchanger and mixing chamber of the system according to the invention, while the inlet of ambient air from the outside into the mixing chamber can be arranged in the adjacent glass panels of the greenhouse. Advantageously in this embodiment the mixing chamber also is provided with an inlet, preferably a controlled inlet, for direct introduction of greenhouse air. In this way the flexibility of controlling the various flows is increased and thus the robustness of the system for dealing with varying conditions.

In a further embodiment the greenhouse comprises a heat pump configured for cooling the aqueous liquid flow that has been heat exchanged in the condenser, preferably to the freezing point of water or lower, having a heat pump inlet for entering the aqueous liquid flow that has been used for heat exchange in the condenser, and a heat pump outlet for discharging the cooled aqueous liquid flow, wherein the heat pump inlet is connected to the liquid outlet of the condenser and the heat pump outlet is connected to the liquid inlet of the condenser.

Preferably the greenhouse also comprises a storage for temporarily storing the cooled aqueous liquid flow and ice having a storage inlet for supplying the liquid flow from the heat pump, which storage inlet is connected to the heat pump outlet via an intermediate conduit; and a storage outlet for discharging an aqueous liquid flow, which storage outlet is connected to the liquid inlet of the condenser via a aqueous cooling liquid supply conduit.

In the condenser, greenhouse air sucked in from the greenhouse interior is cooled by an aqueous cooling fluid, e.g. having a temperature of less than 6 °C, preferably less than 1 °C, such as about 0 °C, such that water condenses from the greenhouse air, and the dehumidified air is returned back to the greenhouse interior. On its way to the condenser the greenhouse air to be dehumidified is pre-cooled in the greenhouse air heat exchanger against the flow of dehumidified greenhouse air that is returned from the condenser, which is pre-heated thereby. The greenhouse air heat exchanger, preferably having a counter current configuration, is capable of withdrawing about 35-50% of the coldness required for dehumidification by pre-heating the dehumidified air that is returned to the greenhouse interior. This allows for a similar reduction of the condenser and heat pump capacity. The contribution of this greenhouse air heat exchanger can be increased if the temperature of the dehumidified air downstream of the condenser is lower. Similarly lowering the temperature of the circulating aqueous liquid flow or increasing the flow raises the overall dehumidification capacity of the combination of greenhouse air heat exchanger and condenser. An increase of about 50% can be achieved if the temperature of the aqueous liquid flow fed to the condenser is about 1 °C or less instead of the typical 7 °C.

Advantageously the condenser and greenhouse air heat exchanger are configured for dehumidifying the greenhouse air deeply, such as below 8.5 g water/kg air, preferably below 6.5 g water/kg air, more preferably below 5.5 g water/kg.

The condensate is separated and removed from the condenser. The aqueous liquid flow after heat exchanging contact with the greenhouse air in the condenser is cooled in the heat pump, to a temperature at or below the freezing point of water. In case of the aqueous liquid flow consisting of water only, the water present in the aqueous cooling fluid derived from the condenser is partially solidified thereby obtaining a mixture of aqueous liquid flow and ice, which is stored temporarily in the storage (buffer or reservoir). The aqueous liquid flow may also be comprised of a mixture of water and a suitable freezing point lowering agent, such as glycol. In such an embodiment the storage may comprise a plurality of containers filled with water, that can be indirectly frozen by the aqueous liquid flow through heat exchange. Examples of such containers are a plurality of relatively small balls or cubes e.g. made of plastic, having sufficient flexibility and stretch to accommodate the increased volume when the inside water is converted to ice. Another example of storage is a water reservoir with heat exchange tubes for distributing the aqueous fluid. The aqueous liquid flow for the condenser is withdrawn from the storage. Lowering the temperature of the circulating aqueous liquid flow or increasing the flow to the condenser raises the overall dehumidification capacity of the combination of greenhouse air heat exchanger and condenser without having increased the heat exchanging surface area of these exchangers.

The system according to the invention advantageously uses the solidifying of water/melting energy of ice to store energy in the form of coldness in the temporary storage. This allows to store much more energy (coldness) in the same volume of aqueous cooling liquid than in the systems according to the prior art.

Closed greenhouse systems known today operate at temperatures of the cooling water supplied to the condenser in the range of about 7 °C and higher. The cooling water downstream of the condenser is about 17 °C. The difference between the heat reclaimed from the greenhouse air in the condenser resulting in a liquid flow having a temperature of about 17 °C and the temperature of the cooling water downstream the heat pump, typically about 7 °C, is only 10 °C. With respect to the heat capacity of water having a temperature difference of 10 °C between the ingoing and outgoing flow ice can store about 80 times more energy.

In this embodiment of the invention the cold aqueous cooling liquid fed to the condenser is lower than 6 °C, preferably less than 1 °C. The heat exchanger/storage where the ice is generated may be an open direct contact heat exchanger. Differing from the prior art systems this embodiment of the invention does not require an additional heat exchanger between its storage and the cooling aqueous cooling liquid supply to the condenser. Use of an aquifer requires an additional heat exchanger between the aquifer and the cold water supply typically resulting in a temperature loss of about 2 °C. Thus in the prior art storage at 6 °C results in cooling water having a temperature of about 8 °C that is directed to the condenser.

In this embodiment of the invention the storage of ice - in any form as explained above - and cold aqueous cooling liquid is the component that decouples the heat requirements or function of the indoor climate from the cooling (cold) requirements for dehumidification in the condenser. In a balanced situation the heat requirement of the greenhouse is derived via the heat pump from the coldness required for dehumidification. Heat of condensation of humid air is used to heat the greenhouse. In case of a higher demand for heating the greenhouse the amount of ice (the amount of cold) increases, while at a higher demand of cold aqueous cooling liquid for dehumidification of the greenhouse air the amount of ice reduces. As the energy tariffs during the night hours are typically less than during daylight, profit can be taken to increase the amount of ice during these cheap night hours. During day hours the greenhouse can be operated in a substantially closed manner (no forced/controlled venting via opened windows) at reasonable energy costs. When coldness is produced without direct need for heating, the excess heat produced by the heat pump system is for instance stored in a hot water tank or cooled in an additional heat exchanger, which could be an air fin cooler. The optimum operating mode is the result of crop growth stage, expected weather conditions, electricity cost (spot price) and storage availability. The cold (energy) stored in the ice can be directly used to cool the aqueous cooling liquid that has been heat exchanged in the condenser by passing this aqueous cooling liquid over or through the storage vessel for heat exchange with the ice. The ice/ aqueous cooling liquid buffer also allows to offer a high peak capacity and respond adequately to an increased demand of cold energy in view of dehumidification during the hours with high sunlight incidence, without the need of having a heat pump system of an equally high peak capacity.

This embodiment of the invention allows to fulfil the required energy demands also during peak hours without the need of a heat pump designed to meet this peak capacity and corresponding large condensers.

The heat pump system used is configured to transfer heat from a heat extraction side (where the aqueous liquid flow is cooled) to a heat release side having a higher temperature. A compression based heat pump, an absorption based heat pump or a thermoacoustic heat pump are suitable examples.

Advantageously the aqueous cooling liquid return conduit and the aqueous cooling liquid supply conduit to the condenser are connected via a third bypass conduit provided with a mixing valve in order to mix the aqueous cooling liquid flow from the storage with the heat exchanged aqueous liquid flow from the condenser. The provision of this third bypass conduit allows to re-use a part of the heat exchanged cooling fluid in the condenser without further circulation over and cooling treatment in the heat pump and storage in a situation where the dehumidification requirements are low, provided that the mixed flow has a sufficiently low temperature (< dew point greenhouse air) to force condensation of water from the greenhouse air in the condenser.

In a further embodiment, the return conduit and the aqueous cooling liquid supply conduit to the condenser are connected to one another by means of a fourth bypass conduit provided with a bypass valve thereby establishing a bypass circuit over the condenser. This embodiment is useful if the condenser is not sufficiently utilized to match the coldness produced by the heat pump. Then the aqueous cooling liquid flow is circulated over the heat pump and the storage thereby increasing the amount of coldness as ice.

In order to bypass the heat pump advantageously a fifth bypass conduit is provided between the return conduit of the aqueous liquid flow and the storage. This operation mode is advantageously applied when previously stored coldness from the storage is consumed when the heat pump is operating at maximum capacity or for example down due to maintenance.

If the coldness stored in the storage is insufficient to provide the aqueous liquid flow for the condenser with an appropriate low temperature, the storage may be (partially) bypassed. In view thereof, advantageously a sixth bypass is arranged between the discharge of the heat pump and the liquid inlet of the condenser.

A further aspect not according to the invention relates to a method of operating the greenhouse according to the invention, wherein if the condensation capacity of the condensers is sufficient to maintain the greenhouse interior climate at a predetermined level of temperature, humidity and carbon dioxide, the greenhouse is operated in a closed condition without introduction of ambient air through the inlet of ambient air into the mixing chamber, and if the condensation capacity of the condensers is insufficient to maintain the greenhouse interior climate at a predetermined level of temperature, humidity and carbon dioxide, the greenhouse is operated in a semi-closed condition with introduction of ambient air through the inlet of ambient air into the mixing chamber.

In yet another aspect the invention relates to a climate control system for controlling the greenhouse interior climate in the growing area as explained above.

The invention is illustrated in the attached drawing, wherein:
Fig.1 is a schematic representation in side view of an embodiment of a greenhouse provided with a climate control system according to the invention;
Fig. 2 is another side view of the embodiment of a greenhouse of Fig. 1;
Fig. 3 is a top view of the embodiment of a greenhouse of Fig. 1;
Fig. 4 shows a schematic representation in side view of another embodiment of a greenhouse provided with a climate control system according to the invention;
Fig. 5 is another side view of the embodiment of a greenhouse of Fig. 4;
Fig. 6 is a top view of the embodiment of a greenhouse of Fig. 4;
Fig. 7 shows an embodiment of a cold water supply system to the condenser of the climate control system of the greenhouse according to the invention; and
Fig. 8 shows another embodiment of a greenhouse according to the invention.
Fig. 9-10 show various embodiments of the bypass over the greenhouse air heat exchanger.

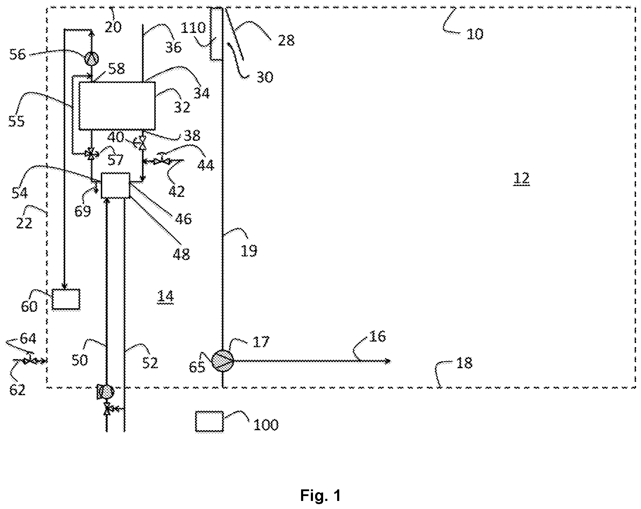

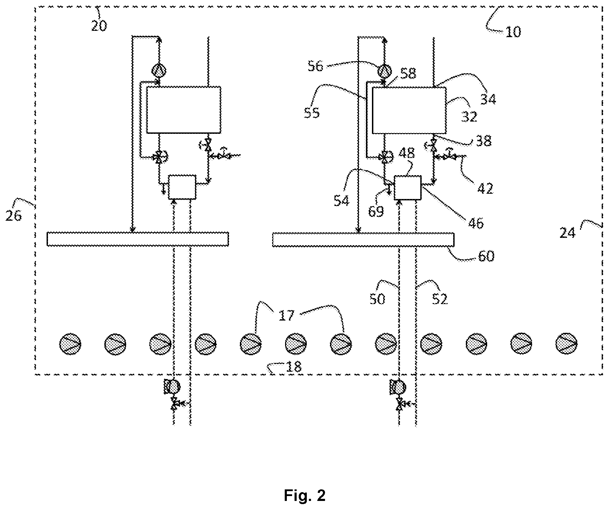

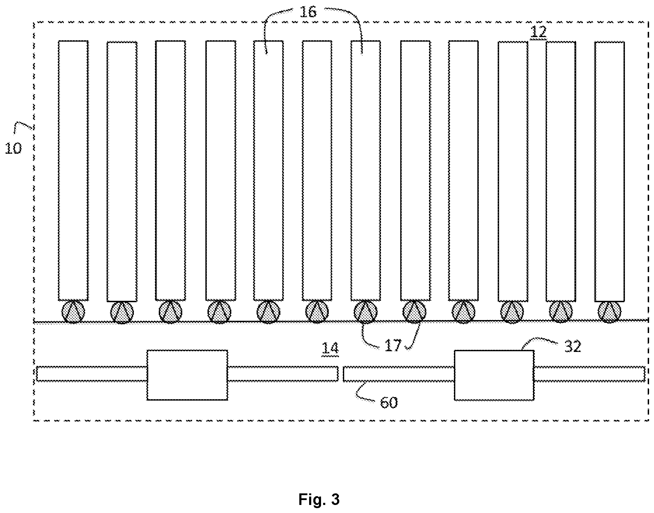

In the various Figures the same parts are indicated by the same reference numerals. Fig. 1-3 show an embodiment of a greenhouse for growing plants, culturing flowers, fruits and/or vegetables including a climate control system according to the invention. A greenhouse is indicated in its entirety by reference numeral 10 and its periphery is represented by dotted lines. The greenhouse 10 comprises a growing area 12 and a working and maintenance space ("corridor") 14. The growing area 10 comprises a plurality of culturing sections, each with its own gutter and associated perforated hose (schematically shown as a rectangle 16 in Fig. 3 with its dedicated fan 17). The space 14 having the function of mixing chamber is separated from the growing area 12 by a separation wall 19 and further delimited by bottom 18, roof 20 and upstanding adjacent glass panel side wall 22 and glass panel head walls 24 and 26. The space 14 essentially extends along the entire side wall 22. The separation wall 19 is provided with a hinged flap 28 at the top covering an inlet opening 30 from the growing area 12 to the space 14. In the space 14 a greenhouse heat exchanger 32 is arranged. The heat exchanger 32 has an air inlet 34 for entering greenhouse air from the space 14, preferably arranged near the opening 30. If required, a feed conduit 36 extending from the vicinity of the opening 30 to the air inlet 34 may be provided as shown. The heat exchanger 32 also has an air outlet 38, e.g. a conduit, provided with a control valve 40 and first bypass 42 having control valve 44. The air outlet 38 is connected to the inlet 46 of condenser 48, wherein greenhouse air derived from the heat exchanger 32 and optionally bypass 42 is dehumidified by cooling with cold water, flowing from supply conduit 50 in counter current arrangement through the condenser 48 to return conduit 52. The dehumidified air flows from the condenser 48 via outlet 54 back to the heat exchanger 32 where the dehumidified air is heated by the incoming greenhouse air. An additional controllable first bypass 55 having control valve 57 is provided between the air outlet 54 of the condenser 48 and air discharge 58 of the heat exchanger 32. In this embodiment fan 56 in the air discharge 58 of heat exchanger 32 draws the greenhouse air through the assembly of heat exchanger 32 and condenser 48 and feeds the heat exchanged dehumidified air to air distributor 60. At a height below the air distributor 60 an inlet conduit 62 provided with control valve 64 for introducing air from the environment into the space 14 is arranged in the side wall 22. If control valve 64 is opened, the fresh air and heat-exchanged dehumidified air, and any recycling greenhouse air that bypasses both the condenser 48 and heat exchanger 32, are mixed and forced to flow by fan 17 through the outlet 65 to the growing area 12 via the respective hose 16. As is apparent in the space 14 a number of assemblies of condensers 48 and associated heat exchangers 32 and air distributors 60 are arranged, each assembly serving a plurality of fans 17 and hoses 16. A controller 100 adjusts the various flows through the control valves, preferably based on measurements, e.g. sensors, of humidity, temperature and carbon dioxide level.

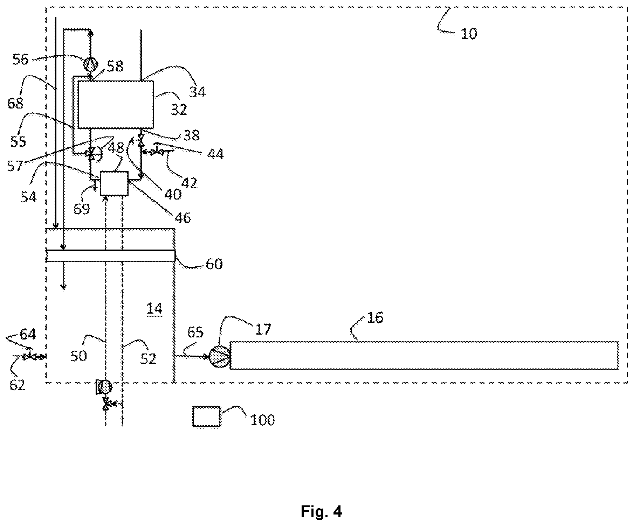

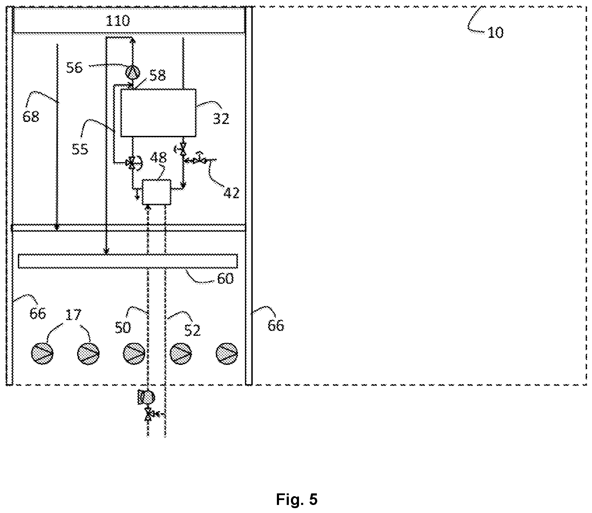

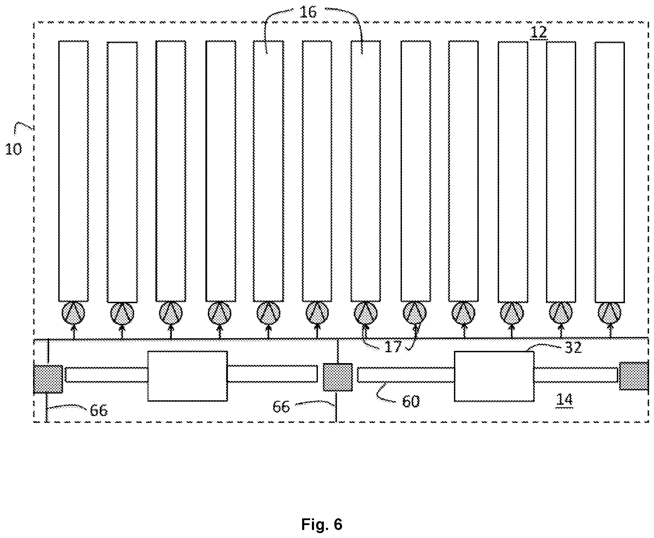

Fig. 4-6 show another embodiment of a greenhouse provided with a climate control system according to the invention. In this embodiment the assemblies of heat exchanger 32 and condenser 48 are arranged above mixing chambers 14, each between supports 66 at the head wall 24. The air distributors 60 are positioned within the mixing chamber 14. The mixing chamber 14 is provided with a greenhouse air inlet 68.

Condensed water is collected from the condenser 48 at 69. This water can be re-used for watering the crops grown in the growing area 12.

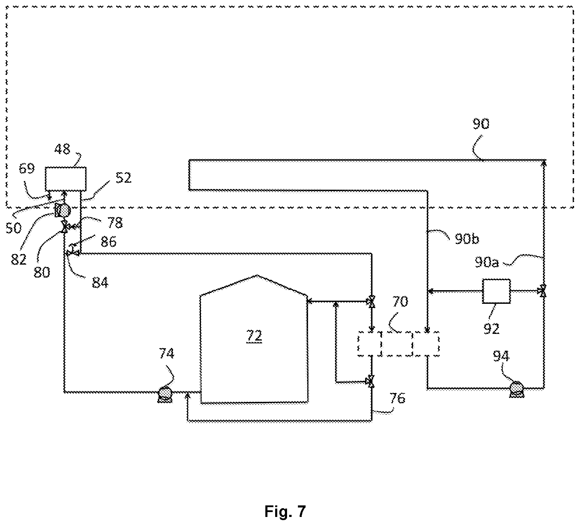

Fig. 7 shows an embodiment of a cold water supply to the local condensers 48 from a central heat pump system 70 arranged for cooling down an aqueous liquid flow from the condenser 48 via return conduit 52, and a storage 72 for keeping a volume of aqueous liquid and ice connected to the condenser via supply conduit 50.

In particular, at the liquid side (cold side) the condenser 48 is connected to the supply conduit 50 for supplying a flow of an aqueous liquid, typically water, e.g. having a temperature of less than 6°C, preferably 1°C or less, and to the return conduit 52 for discharging the heat exchanged aqueous liquid, e.g. having a temperature of about 5 - 15 °C. The flow of aqueous liquid is from the storage 72 where it leaves having a temperature of about 0 °C. The supply conduit 50 is provided with a supply pump 74. The flow of aqueous liquid exiting the condenser 48 is discharged via return conduit 52 to the heat pump 70, and the mixture of ice and water or cooled mixture of water and freezing agent obtained therein is transferred to storage 72 via intermediate aqueous cooling liquid channel section 76. A loop section 78 may be provided between return conduit 52 and supply conduit 50 allowing - by means of control valve 80 and circulation pump 82 - to circulate the aqueous water flow over the condenser 48. Likewise the aqueous liquid flow may be circulated over the heat pump 70 and storage 72 bypassing condenser 48 via a bypass section 84 arranged between the supply conduit 50 and return conduit 52 provided with a bypass valve 86. The heat pump system 70 transfers heat extracted at its heat extraction side from the aqueous liquid flow in the aqueous cooling liquid circuit to its heat release side into the general heating system 90 of the greenhouse, such as a tube rail system providing both a heating function and a conveyor function. A cooler 92, e.g. an air-cooled heat exchanger may be provided to cool the heating medium flowing in the heating system 90 by means of heating medium circulation pump 94, in particular between supply line 90a and return line 90b.

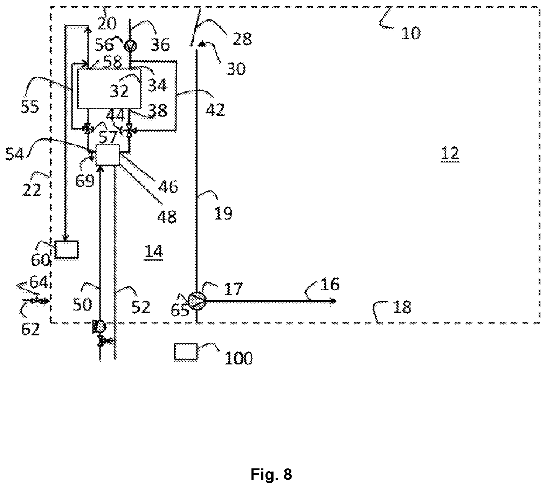

Fig. 8 shows another embodiment of a greenhouse according to the invention, wherein the controllable fan 56 is arranged in the feed conduit 36 to the greenhouse air heat exchanger 32. The bypass 42 over the exchanger 32 is connected with one of its ends to the conduit 36 downstream of the fan 56. The other end having a control valve 44 controlled by controller 100 is connected to the connecting duct that extends between the outlet 38 of the heat exchanger 32 and the inlet 46 of the condenser 48. Optionally an additional controllable bypass 55 having control valve 57 is arranged between the air outlet 54 of the condenser 48 and air discharge 58 of the heat exchanger 32. The fan 56 draws in greenhouse air and forces it through the greenhouse air heat exchanger 32 and the controlled bypass 42. Then the combined flow is subjected to condensation in condenser 48. The air flow resulting from condensation is reheated in the heat exchanger 32 against the incoming greenhouse air. Optionally a partial air flow downstream of the condenser 48 is allowed to bypass the heat exchanger 32 through bypass 55.

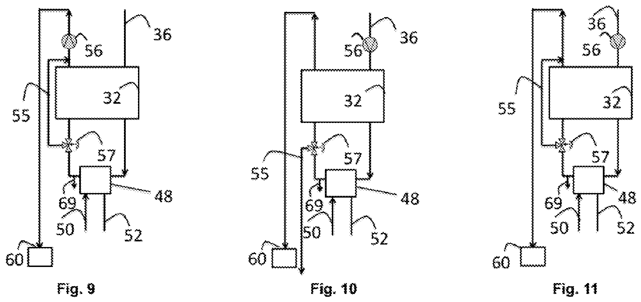

Fig. 9 shows another embodiment of a bypass 55 over the greenhouse air heat exchanger 32. This embodiment is mainly similar to the one of Fig. 1, except that at the feed side of the heat exchanger 32 and condenser 48 the first bypass 42 and control valves 44 and 40 are absent.

Fig. 10 shows yet another embodiment of a bypass 55 over the greenhouse air heat exchanger 32 downstream of the condenser 48. In this embodiment a partial flow of dehumidified air from the condenser 48 is passed via control valve 57 and bypass 55 directly into the mixing chamber, preferably to the inlet of ambient air (not shown). In this embodiment the fan 56 is arranged in the feed conduit 36.

Fig. 11 illustrates still another embodiment of a bypass 55 over the greenhouse air heat exchanger 32 downstream of the condenser 48, which embodiment is similar to that of Fig. 9, except that the fan 56 is arranged in the feed conduit 36.

## Claims

1. A greenhouse (10) for growing plants, comprising
a growing area (12) for growing crops,
a climate control system for controlling the greenhouse interior climate in the growing area, wherein the climate control system comprises
a condenser (48) for dehumidifying greenhouse air having - at the air side - an air inlet (46) for supplying greenhouse air and an air outlet (54) for discharging dehumidified air, and - at the liquid side - a liquid inlet (50) for supplying an aqueous liquid flow and a liquid outlet (52) for discharging an in the condenser heat exchanged aqueous liquid flow; and
a greenhouse air heat exchanger (32) for heat-exchange between greenhouse air derived from the growing area upstream of the air inlet of the condenser and in the condenser dehumidified greenhouse air downstream of the air outlet of the condenser, comprising an air inlet (34) of greenhouse air from the greenhouse interior climate, wherein the air inlet (34) is connected to the air inlet (46) of the condenser through the greenhouse air heat exchanger, and an air discharge (58) of heat exchanged, dehumidified greenhouse air, wherein the air outlet (54) of the condenser is connected to the air discharge through the greenhouse air heat exchanger a first controllable bypass (42; 55) for allowing greenhouse air to bypass the greenhouse air heat exchanger
a controllable fan (56) configured to generate a flow of greenhouse air through the greenhouse air heat exchanger and the condenser,
a mixing chamber (14) in fluid communication with the air discharge of the greenhouse air heat exchanger and in fluid communication with the growing area for introducing greenhouse air and having a controllable inlet (62) for introducing ambient air from the greenhouse exterior environment, and an outlet (65) for air in fluid communication with the growing area;
a controlled fan (17) in the outlet for generating a flow of air from the mixing chamber to the greenhouse growing area.

2. The greenhouse according to claim 1, wherein the first controllable bypass (42) is fluidly connected to the air inlet of the condenser.

3. The greenhouse according to claim 1 or 2, wherein the first controllable bypass (55) is provided between the air outlet of the condenser and the air discharge of the greenhouse air heat exchanger.

4. The greenhouse according to any one of the preceding claims, wherein the air discharge (58) of the greenhouse air heat exchanger is connected to an air distributor (60), positioned in the mixing chamber, for distributing the heat exchanged, dehumidified greenhouse air in the mixing chamber.

5. The greenhouse according to claim 4, wherein the air inlet (34) of the greenhouse air heat exchanger is positioned at a position higher than the controllable inlet for introducing ambient air, preferably the air inlet (34) is positioned at a position higher than air distributor (60).

6. The greenhouse according to any one of the preceding claims, wherein the outlet (65) for air in fluid communication with the growing area is positioned below the air inlet of the greenhouse air heat exchanger.

7. The greenhouse according to any one of the preceding claims, wherein the condenser (48) and greenhouse air heat exchanger (32) are positioned inside the mixing chamber, the mixing chamber preferably being a working and maintenance space (so called "corridor") of the greenhouse.

8. The greenhouse according to any one of the preceding claims 1-6, wherein the condenser (48) and greenhouse air heat exchanger (32) are positioned outside the mixing chamber, the mixing chamber preferably being arranged at a head wall of the greenhouse, more preferably between head supporting posts (66).

9. The greenhouse according to any one of the preceding claims, further comprising a heat pump (70) configured for cooling the aqueous liquid flow that has been heat exchanged in the condenser, preferably to the freezing point of water or lower, having a heat pump inlet for entering the aqueous liquid flow that has been used for heat exchange in the condenser, and a heat pump outlet for discharging the cooled aqueous liquid flow, wherein the heat pump inlet is connected to the liquid outlet of the condenser and the heat pump outlet is connected to the liquid inlet of the condenser.

10. The greenhouse according to claim 9, further comprising a storage (72) for temporarily storing the cooled aqueous liquid flow and ice having a storage inlet for supplying the liquid flow from the heat pump, which storage inlet is connected to the heat pump outlet via an intermediate conduit (76) and a storage outlet for discharging an aqueous liquid flow, which storage outlet is connected to the liquid inlet of the condenser via the aqueous cooling liquid supply conduit (50).

11. The greenhouse according to any one of the preceding claims, wherein the growing area (12) comprises a plurality of growing sections (16), wherein each growing section is connected to at least one climate control system.

12. The greenhouse according to claim 11, wherein the condensers of the climate control systems are connected to a single heat pump (70) according to claim 9 and/or storage (72) according to claim 10.

13. The greenhouse according to any one of the preceding claims, wherein the controllable fan (56) is arranged upstream of the greenhouse air heat exchanger (32), and the controllable bypass (42) is connected at one end to the air inlet (34) of the greenhouse air heat exchanger and at the other end to the air inlet (46) of the condenser (48).

14. A climate control system configured for controlling the greenhouse interior climate in the growing area (12) in a greenhouse according to any one of the preceding claims 1-13.

## Patentansprüche

1. Gewächshaus (10) für den Anbau von Pflanzen, umfassend
ein Anbaugebiet (12) für den Anbau von Kulturpflanzen,
ein Klimaregelungssystem zum Regeln des Gewächshausinnenklimas im Anbaugebiet,
wobei das Klimaregelungssystem Folgendes umfasst:
einen Verflüssiger (48) zum Entfeuchten von Gewächshausluft, der - auf der Luftseite - einen Lufteinlass (46) zum Zuführen von Gewächshausluft und einen Luftauslass (54) zum Abführen von entfeuchteter Luft aufweist, und - auf der Flüssigkeitsseite - einen Flüssigkeitseinlass (50) zum Zuführen eines wässrigen Flüssigkeitsstroms und einen Flüssigkeitsauslass (52) zum Abführen eines im Verflüssiger wärmegetauschten wässrigen Flüssigkeitsstroms; und
einen Gewächshausluftwärmetauscher (32) zum Wärmeaustausch zwischen Gewächshausluft, die aus dem Anbaugebiet stromaufwärts des Lufteinlasses des Verflüssigers stammt, und in dem Verflüssiger entfeuchteter Gewächshausluft stromabwärts des Luftauslasses des Verflüssigers, umfassend einen Lufteinlass (34) für Gewächshausluft aus dem Gewächshausinnenklima, wobei der Lufteinlass (34) mit dem Lufteinlass (46) des Verflüssigers durch den Gewächshausluftwärmetauscher verbunden ist, und einen Luftauslass (58) für wärmegetauschter, entfeuchteter Gewächshausluft, wobei der Luftauslass (54) des Verflüssigers mit dem Luftauslass durch den Gewächshausluftwärmetauscher verbunden ist,
einen ersten steuerbaren Bypass (42; 55), der es der Gewächshausluft ermöglicht, den Gewächshausluftwärmetauscher zu umgehen,
ein steuerbares Gebläse (56), das dazu ausgelegt ist, einen Strom von Gewächshausluft durch den Gewächshausluftwärmetauscher und den Verflüssiger zu erzeugen,
eine Mischkammer (14) in Fluidverbindung mit dem Luftauslass des Gewächshausluftwärmetauschers und in Fluidverbindung mit dem Anbaugebiet zum Einleiten von Gewächshausluft, und die einen steuerbaren Einlass (62) zum Einleiten von Umgebungsluft aus der Außenumgebung des Gewächshauses und einen Auslass (65) für Luft in Fluidverbindung mit dem Anbaugebiet aufweist;
ein gesteuertes Gebläse (17) im Auslass zum Erzeugen eines Luftstroms aus der Mischkammer in das Gewächshausanbaugebiet.

2. Gewächshaus gemäß Anspruch 1, wobei der erste steuerbare Bypass (42) mit dem Lufteinlass des Verflüssigers fluidverbunden ist.

3. Gewächshaus gemäß Anspruch 1 oder 2, wobei der erste steuerbare Bypass (55) zwischen dem Luftauslass des Verflüssigers und dem Luftauslass des Gewächshausluftwärmetauschers vorgesehen ist.

4. Gewächshaus gemäß einem der vorhergehenden Ansprüche, wobei der Luftauslass (58) des Gewächshausluftwärmetauschers mit einem in der Mischkammer angeordneten Luftverteiler (60) verbunden ist, um die wärmegetauschte, entfeuchtete Gewächshausluft in der Mischkammer zu verteilen.

5. Gewächshaus gemäß Anspruch 4, wobei der Lufteinlass (34) des Gewächshausluftwärmetauschers an einer höheren Position als der steuerbare Einlass zum Einleiten von Umgebungsluft angeordnet ist, wobei der Lufteinlass (34) vorzugsweise an einer höheren Position als der Luftverteiler (60) angeordnet ist.

6. Gewächshaus gemäß einem der vorhergehenden Ansprüche, wobei der Auslass (65) für Luft in Fluidverbindung mit dem Anbaugebiet unterhalb des Lufteinlasses des Gewächshausluftwärmetauschers angeordnet ist.

7. Gewächshaus gemäß einem der vorhergehenden Ansprüche, wobei der Verflüssiger (48) und der Gewächshausluftwärmetauscher (32) innerhalb der Mischkammer angeordnet sind, wobei die Mischkammer vorzugsweise ein Arbeits- und Wartungsraum (ein sogenannter "Korridor") des Gewächshauses ist.

8. Gewächshaus gemäß einem der vorhergehenden Ansprüche 1-6, wobei der Verflüssiger (48) und der Gewächshausluftwärmetauscher (32) außerhalb der Mischkammer angeordnet sind, wobei die Mischkammer vorzugsweise an einer Kopfwand des Gewächshauses, noch bevorzugter zwischen Kopfstützpfosten (66), angeordnet ist.

9. Gewächshaus gemäß einem der vorhergehenden Ansprüche, ferner umfassend eine Wärmepumpe (70), die zum Kühlen des wässrigen Flüssigkeitsstroms ausgelegt ist, der im Verflüssiger, vorzugsweise auf den Gefrierpunkt von Wasser oder darunter, wärmegetauscht wurde, mit einem Wärmepumpeneinlass zum Einlassen des wässrigen Flüssigkeitsstroms, der für den Wärmeaustausch im Verflüssiger verwendet wurde, und einem Wärmepumpenauslass zum Auslassen des gekühlten wässrigen Flüssigkeitsstroms, wobei der Wärmepumpeneinlass mit dem Flüssigkeitsauslass des Verflüssigers verbunden ist und der Wärmepumpenauslass mit dem Flüssigkeitseinlass des Verflüssigers verbunden ist.

10. Gewächshaus gemäß Anspruch 9, ferner umfassend einen Speicher (72) zum vorübergehenden Speichern des gekühlten wässrigen Flüssigkeitsstroms und von Eis mit einem Speichereinlass zum Zuführen des Flüssigkeitsstroms aus der Wärmepumpe, wobei der Speichereinlass über eine Zwischenleitung (76) mit dem Wärmepumpenauslass verbunden ist, und einem Speicherauslass zum Abgeben eines wässrigen Flüssigkeitsstroms, wobei der Speicherauslass über die Zufuhrleitung (50) für wässrige Kühlflüssigkeit mit dem Flüssigkeitseinlass des Verflüssigers verbunden ist.

11. Gewächshaus gemäß einem der vorhergehenden Ansprüche, wobei das Anbaugebiet (12) eine Vielzahl von Anbauabschnitten (16) umfasst, wobei jeder Anbauabschnitt mit mindestens einem Klimaregelungssystem verbunden ist.

12. Gewächshaus gemäß Anspruch 11, wobei die Verflüssiger der Klimaregelungssysteme mit einer einzelnen Wärmepumpe (70) gemäß Anspruch 9 und/oder einem Speicher (72) gemäß Anspruch 10 verbunden sind.

13. Gewächshaus gemäß einem der vorhergehenden Ansprüche, wobei das steuerbare Gebläse (56) stromaufwärts des Gewächshausluftwärmetauschers (32) angeordnet ist und der steuerbare Bypass (42) an einem Ende mit dem Lufteinlass (34) des Gewächshausluftwärmetauschers und am anderen Ende mit dem Lufteinlass (46) des Verflüssigers (48) verbunden ist.

14. Klimaregelungssystem, das zum Regeln des Gewächshausinnenklimas im Anbaugebiet (12) in einem Gewächshaus gemäß einem der vorhergehenden Ansprüche 1-13 ausgelegt ist.

## Revendications

1. Serre (10) pour la croissance de plantes, comprenant
une zone de croissance (12) pour la croissance de cultures,
un système de climatisation pour la régulation du climat intérieur de la serre dans la zone de croissance,
dans laquelle le système de climatisation comprend
un condenseur (48) pour la déshumidification de l'air de la serre ayant - sur le côté air - une entrée d'air (46) servant à fournir de l'air de serre et une sortie d'air (54) servant à évacuer de l'air déshumidifié, et - sur le côté liquide - une entrée de liquide (50) servant à fournir une circulation de liquide aqueux et une sortie de liquide (52) servant à évacuer une circulation de liquide aqueux ayant subi un échange de chaleur dans le condenseur ; et
un échangeur de chaleur d'air de serre (32) pour un échange de chaleur entre de l'air de serre provenant de la zone de croissance en amont de l'entrée d'air du condenseur et de l'air de serre déshumidifié dans le condenseur en aval de la sortie d'air du condenseur, comprenant une entrée d'air (34) d'air de serre provenant du climat intérieur de la serre, l'entrée d'air (34) étant raccordée à l'entrée d'air (46) du condenseur par le biais de l'échangeur de chaleur d'air de serre, et une évacuation d'air (58) d'air de serre déshumidifié ayant subi un échange de chaleur, la sortie d'air (54) du condenseur étant raccordée à l'évacuation d'air par le biais de l'échangeur de chaleur d'air de serre, une première dérivation contrôlable (42; 55) pour permettre à l'air de serre de contourner l'échangeur de chaleur d'air de serre ;
un ventilateur contrôlable (56) configuré pour générer une circulation d'air de serre à travers l'échangeur de chaleur d'air de serre et le condenseur ;
une chambre de mélange (14) en communication fluidique avec l'évacuation d'air de l'échangeur de chaleur d'air de serre et en communication fluidique avec la zone de croissance pour introduire de l'air de serre et ayant une entrée contrôlable (62) pour introduire de l'air ambiant provenant de l'environnement extérieur de la serre, et une sortie (65) pour l'air en communication fluidique avec la zone de croissance ;
un ventilateur contrôlé (17) dans la sortie pour générer une circulation d'air depuis la chambre de mélange jusqu'à la zone de croissance de la serre.

2. Serre selon la revendication 1, dans laquelle la première dérivation contrôlable (42) est raccordée fluidiquement à l'entrée d'air du condenseur.

3. Serre selon la revendication 1 ou 2, dans laquelle la première dérivation contrôlable (42) est disposée entre la sortie d'air du condenseur et l'évacuation d'air de l'échangeur de chaleur d'air de serre.

4. Serre selon l'une quelconque des revendications précédentes, dans laquelle l'évacuation d'air (58) de l'échangeur de chaleur d'air de serre est raccordée à un distributeur d'air (60), positionné dans la chambre de mélange, pour distribuer l'air de serre déshumidifié ayant subi un échange de chaleur dans la chambre de mélange.

5. Serre selon la revendication 4, dans laquelle l'entrée d'air (34) de l'échangeur de chaleur d'air de serre est positionnée à une position plus haute que l'entrée contrôlable servant à introduire de l'air ambiant, de préférence l'entrée d'air (34) est positionnée à une position plus haute que le distributeur d'air (60).

6. Serre selon l'une quelconque des revendications précédentes, dans laquelle la sortie (65) pour l'air en communication fluidique avec la zone de croissance est positionnée en dessous de l'entrée d'air de l'échangeur de chaleur d'air de serre.

7. Serre selon l'une quelconque des revendications précédentes, dans laquelle le condenseur (48) et l'échangeur de chaleur d'air de serre (32) sont positionnés à l'intérieur de la chambre de mélange, la chambre de mélange étant de préférence un espace de travail et d'entretien (appelé « corridor ») de la serre.

8. Serre selon l'une quelconque des revendications 1 à 6 précédentes, dans laquelle le condenseur (48) et l'échangeur de chaleur d'air de serre (32) sont positionnés à l'extérieur de la chambre de mélange, la chambre de mélange étant de préférence disposée au niveau d'une paroi de tête de la serre, mieux encore entre des montants de support de tête (66).

9. Serre selon l'une quelconque des revendications précédentes, comprenant en outre une pompe à chaleur (70) configurée pour refroidir la circulation de liquide aqueux qui a subi un échange de chaleur dans le condenseur, de préférence jusqu'au point de congélation de l'eau ou moins, ayant une entrée de pompe à chaleur pour faire entrer la circulation de liquide aqueux qui a été utilisée pour l'échange de chaleur dans le condenseur, et une sortie de pompe à chaleur pour évacuer la circulation de liquide aqueux refroidie, dans laquelle l'entrée de pompe à chaleur est raccordée à la sortie de liquide du condenseur et la sortie de pompe à chaleur est raccordée à l'entrée de liquide du condenseur.

10. Serre selon la revendication 9, comprenant en outre un dispositif de stockage (72) pour stocker temporairement la circulation de liquide aqueux refroidie et de la glace ayant une entrée de dispositif de stockage servant à fournir la circulation de liquide provenant de la pompe à chaleur, laquelle entrée de dispositif de stockage est raccordée à la sortie de pompe à chaleur par le biais d'une conduite intermédiaire (76), et une sortie de dispositif de stockage servant à évacuer une circulation de liquide aqueux, laquelle sortie de dispositif de stockage est raccordée à l'entrée de liquide du condenseur par le biais de la conduite d'alimentation en liquide de refroidissement aqueux (50).

11. Serre selon l'une quelconque des revendications précédentes, dans laquelle la zone de croissance (12) comprend une pluralité de sections de croissance (16), chaque section de croissance étant raccordée à au moins un système de climatisation.

12. Serre selon la revendication 11, dans laquelle les condenseurs des systèmes de climatisation sont raccordés à une seule pompe à chaleur (70) selon la revendication 9 et/ou un seul dispositif de stockage (72) selon la revendication 10.

13. Serre selon l'une quelconque des revendications précédentes, dans laquelle le ventilateur contrôlable (56) est disposé en amont de l'échangeur de chaleur d'air de serre (32), et la dérivation contrôlable (42) est raccordée à une extrémité à l'entrée d'air (34) de l'échangeur de chaleur d'air de serre et à l'autre extrémité à l'entrée d'air (46) du condenseur (48).

14. Système de climatisation configuré pour réguler le climat intérieur d'une serre dans la zone de croissance (12) dans une serre selon l'une quelconque des revendications 1 à 13 précédentes.
